# FASCICULE DE BREVET EUROPEEN

(11) **EP 1 648 807 B1**
(45) Date de publication et mention de la délivrance du brevet: **08.10.2008**
(21) Numéro de dépôt: 04766230.9
(22) Date de dépôt: 15.07.2004
(51) Int. Cl.: B65H 51/14, H02G 1/06

(54) **EXTRACTEUR D'ANTENNE LINEAIRE REMORQUEE OU D'OBJET SIMILAIRE**
EXTRAKTOR FÜR LINEARE SCHLEPPANTENNE ODER DERGLEICHEN
EXTRACTOR FOR TOWED LINEAR ANTENNA OR THE LIKE

(30) Priorité: 29.07.2003 FR 0309333
(43) Date de publication de la demande: 26.04.2006
(73) Titulaire: Thales, 92200 Neuilly Sur Seine (FR)
(72) Inventeur: SUPPA, Vito THALES Intellectual Property, F-94117 Arcueil (FR); BOREL, Christophe THALES Intellectual Property, F-94117 Arcueil (FR)
(74) Mandataire: Lucas, Laurent Jacques
(86) Numéro de dépôt international: PCT/EP2004/051500
(87) Numéro de publication internationale: WO 2005/014453

(56) Documents cités:
- FR-A- 1 119 158
- FR-A- 2 567 864
- US-A- 4 869 412
- US-A- 5 839 636

## Description

La présente invention concerne un dispositif de halage automatique d'objets de forme tubulaire de grande longueur. Ce dispositif permet notamment de mettre à la mer ou bien de remonter et de stocker en cale un objet tubulaire de grande longueur et de structure relativement souple et fragile. Parmi ces objets on peut notamment citer des câbles sous-marins, des tuyaux ou encore des antennes sonar linéaires de type "flûte".
La manipulation d'objets de forme sensiblement tubulaire et de grande longueur est une opération délicate qui est généralement réalisée ou au moins contrôlée par des opérateurs humains. L'opération est en outre rendue encore plus délicate si l'objet manipulé a une structure souple et fragile comportant par exemple une succession d'objets relativement fragiles mis dans une gaine tubulaire plus souple. De même, la manipulation d'un objet de forme générale tubulaire et présentant une irrégularité de diamètre sur sa longueur, est une opération malaisée.
Dans le cas de bâtiments de surface ou de bâtiments sous-marins mettant en oeuvre des sonars équipés d'antennes tubulaires, de type "flûte" par exemple, la mise à la mer de l'antenne est généralement réalisée à la main par plusieurs opérateurs. L'antenne logée sur un treuil est halée par les opérateurs qui laissent l'extrémité libre filer dans l'eau. Le halage se poursuit ainsi jusqu'à ce que la longueur immergée soit suffisante et que le déploiement se poursuive de lui-même par entraînement, sous l'action du poids de l'antenne conjugué à la vitesse du navire. Outre qu'elle est malaisée, cette manoeuvre peut s'avérer dangereuse voire impossible à réaliser. C'est notamment le cas lorsque l'état de la mer rend difficile la station debout sur la zone du pont du navire où elle s'effectue. De telles difficultés de mise en oeuvre se retrouvent également lors de la mise à l'eau par un navire câblier d'un câble téléphonique ou électrique par exemple.
Il existe bien entendu divers dispositifs permettant de faciliter la mise à l'eau d'objets allongés ou tubulaires de dimensions importantes. On peut citer les ancres flottantes fixes ou largables qui entraînent avec elles l'objet auquel elles sont arrimées par une extrémité. On peut également citer des dispositifs de manutention tels que par exemple des rouleaux presseurs, des tapis roulants, des tours mors sur poulie motrice, etc....
On peut encore citer des dispositifs de manutention tels que ceux décrits dans la demande de brevet français déposée par A. Sciard et al. le 19/07/1984 et publiée sous le numéro 2 567 864, et le brevet français délivré à la société Geoffroy Delore le 03/04/1956 sous le numéro 1.119.158. Ces deux documents divulguent des dispositifs permettant le halage d'objets allongés au moyen de câbles tracteurs enroulés en spirale autour de l'objet à haler, l'adhérence des câbles étant assurée par la tension exercée sur ces câbles.
On peut enfin citer le dispositif de halage décrit dans le brevet américain délivré à la société Lockheed Martin Corporation le 24/11/1998 sous le numéro 5,839,636. Ce document divulgue un dispositif composé de deux bandes roulantes en vis à vis, entre lesquelles passe l'objet à haler. Selon ce document ces bandes roulantes sont constituées d'éléments qui lorsqu'ils sont en contact avec l'objet à haler exercent sur la surface de l'objet une succion ou aspiration qui assure l'adhérence des bandes à l'objet, la force d'adhérence pouvant être modulée en agissant sur la force de succion des éléments.
Tous ces dispositifs présentent généralement de gros inconvénients d'ordre mécanique. Ces inconvénients se traduisent notamment par les contraintes excessives de pression ou de traction qu'ils exercent sur l'objet manipulé. Des contraintes trop fortes ou mal réparties peuvent endommager ce dernier.
De tels dispositifs sont par ailleurs mal adaptés à la manutention d'objets dont le diamètre n'est pas constant ou d'objets présentant des portions rigides. Il en va de même des objets présentant une gaine dont l'état de surface ou la dureté gêne le fonctionnement du dispositif utilisé.
Ces inconvénients de mise en oeuvre rendent les divers dispositifs existants difficilement automatisables, la présence d'un opérateur se révélant nécessaire sinon indispensable.

Pour pallier les inconvénients l'invention propose un dispositif de manutention automatique permettant de manipuler des objets de forme sensiblement tubulaires de grande longueur. A cet effet elle a pour objet un dispositif automatique de manutention d'objets de forme tubulaire de grande longueur comportant notamment des moyens de traction constitués d'au moins deux bandes roulantes à surface rugueuses qui viennent se plaquer de part et d'autre de l'objet et l'entraînent dans un mouvement de traction et des moyens de préhension qui maintiennent en permanence les bandes roulantes plaquées sur l'objet de façon à assurer une bonne adhérence. L'invention a également pour objet des moyens pour actionner de manière coordonnée les moyens de tractions et les moyens de préhension, de sorte que l'objet à haler subit une traction continue durant toute l'opération de halage.
Le dispositif selon l'invention présente pour avantage d'être monté sur un châssis fixe et de ne donc pas nécessiter de zone de mis en oeuvre. Il est ainsi particulièrement destiné à des bâtiments où l'espace disponible est restreint, comme des sous-marins.
Il présente également l'avantage d'effectuer une action de halage continue qui sollicite moins la résistance de l'objet à la traction. De plus, il s'adapte avantageusement à des objets dont la section n'est pas constante.

D'autres caractéristiques et avantages apparaîtront au cours de la description qui suit, description qui sera faîte en faisant référence aux figures annexées qui représentent:
la figure 1, une vue d'ensemble du dispositif selon l'invention;
la figure 2, une vue de dessus du dispositif;
la figure 3, une vue partielle en perspective avant du dispositif;

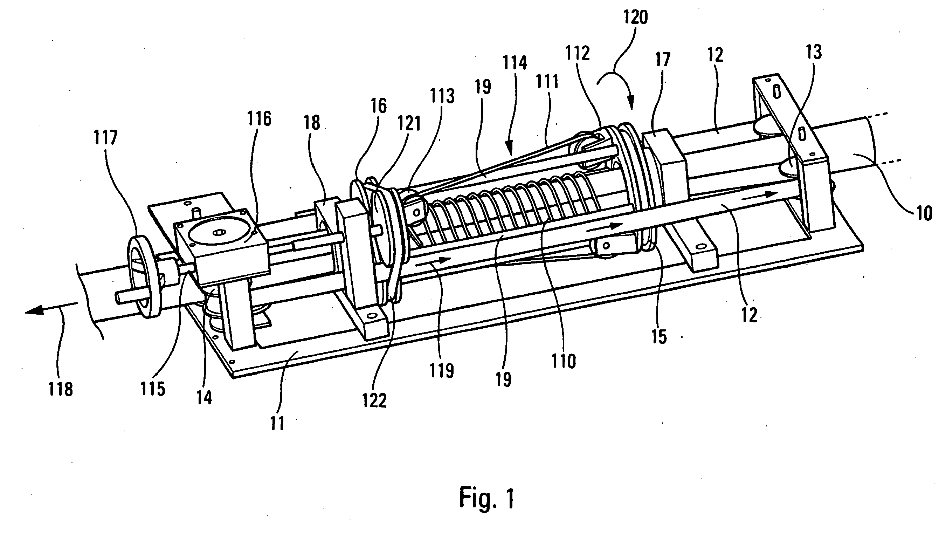

La figure 1 présente une vue d'ensemble d'une forme possible de réalisation du dispositif selon l'invention. Le dispositif représenté comporte un châssis principal 11 qui supporte deux mécanismes formant les moyens de traction de l'objet 10 à haler et les moyens de préhension.

Les moyens de traction sont principalement constitués d'un ensemble de deux courroies plates 12 formant des bandes roulantes disposées de part et d'autre et le long de l'objet 10. Chaque bande 12 est enroulées autour de deux poulies 13 et 14 fixées sur des montants situés à chacune des extrémités du châssis principal. Les surfaces des bandes roulantes qui viennent en contact avec la surface de l'objet 10 sont de préférence rugueuse afin d'assurer une meilleure adhérence en traction. Les bandes roulantes seront donc de préférence réalisées dans un matériau à fort coefficient de frottement.

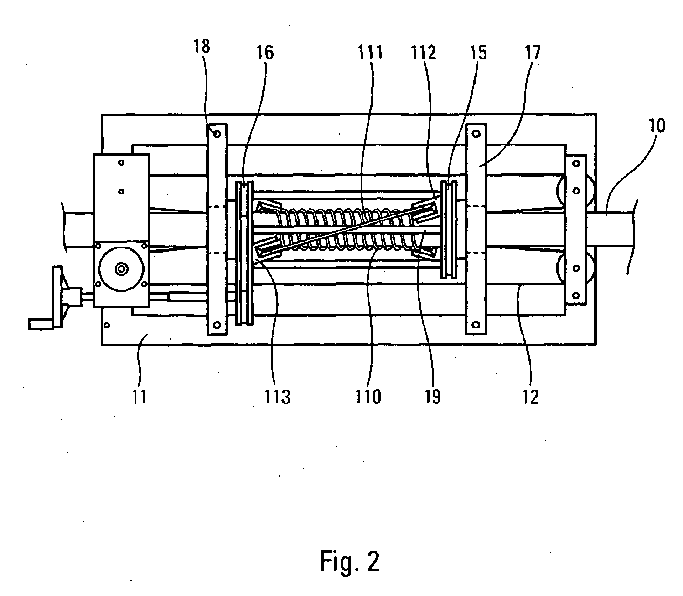

Les moyens de préhension sont constitués de deux flasques 15 et 16 en forme de disques reliés l'une à l'autre par des montants 19. Ces flasques sont montés mobile en rotation autour de l'axe longitudinal du dispositif sur des pièces de maintien 17 et 18, par l'intermédiaire de paliers par exemple. L'ensemble forme un châssis 114 mobile en rotation. Le flasque 15 se présente sous la forme d'un disque simple, tandis que le flasque 16 qui permet l'entraînement en rotation du châssis 114 a la forme d'une poulie et présente une gorge. Les parties centrales des flasques 15 et 16 et des pièces de maintien 17 et 18 sont évidées, de façon à pouvoir être traversés par l'objet 10 à haler.
Les moyens de préhension assurent le contact entre les bandes roulantes 12 et l'objet à haler 10 au moyen de courroies 110 bobinées en hélice autour de l'objet à haler et des portions des bandes roulantes en contact avec l'objet. Le bobinage est suffisamment serré pour maintenir l'objet et les bandes roulantes en contact étroit. Les extrémités de chacune des courroies sont raccordées entre elles pour former un brin droit 111 qui passe dans les gorges des poulies opposées 112 et 113. Ces poulies qui ont notamment pour fonction d'assurer la tension des courroies sont fixées respectivement sur chacun des flasques 15 et 16, comme le montre la figure 2.

Pour renforcer l'action de serrage et pour centrer l'objet à haler, les moyens de préhension peuvent comporter plusieurs courroies, de préférence des courroies élastiques de section circulaire. Les figures 1 et 2 présentent un exemple non restrictif de dispositif comportant des moyens de préhension constitués par trois courroies dont seulement deux sont visibles. Ces courroies sont enroulées en spirales à la manière d'une hélice à triple pas.

Comme il a été dit précédemment, l'ensemble constitué des flasques 15 et 16 et des montants 19 forme un châssis 114 mobile en rotation autour de l'axe longitudinal du dispositif. Suivant son sens de rotation, ce châssis permet de réaliser simultanément le bobinage de la courroie sur l'objet 10, par une des extrémités et son débobinage par l'autre extrémité.

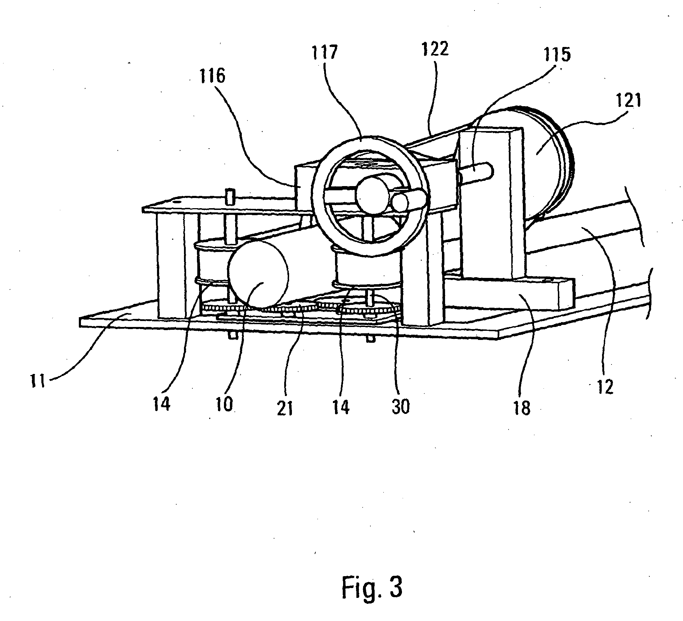

Pour réaliser le halage de l'objet 10, le dispositif selon l'invention comporte également des moyens de mise en mouvement des moyens de traction et de préhension. Dans l'exemple de réalisation illustré par les figures 1 et 2 ces moyens comportent un arbre principal 115 et un système d'engrenage 21 et de réducteurs 116 sur lequel sont accouplés des arbres secondaires permettant de mettre en rotation les poulies 14 qui assurent l'entraînement des bandes roulantes 12, ainsi que la poulie 16 qui entraîne en rotation le châssis 114. Dans l'exemple de réalisation, la poulie 16 est couplée par l'intermédiaire d'une courroie 122 à une autre poulie 121 solidaire de l'arbre 115. La représentation de la figure 3 offre une vue plus détaillée de l'agencement des différents éléments que comportent les moyens de mise en mouvement. Dans l'exemple illustré par les figures 1, 2 et 3 la mise en rotation des poulies d'entraînement des bandes roulantes 12 est assuré par un arbre secondaire unique 30 et un jeu d'engrenages 21.

Les mouvements des bandes roulantes 12 et du châssis 114 sont synchronisés de façon à assurer un halage correct de l'objet 10. L'arbre principal est par exemple entraîné par un moteur hydraulique ou électrique ou plus simplement par l'intermédiaire d'une manivelle 117 comme représenté sur les figures 1 et 2.

Le dispositif selon l'invention comporte donc deux moyens distincts pour assurer les fonctions de traction et de préhension. Les moyens de traction sont animés d'un mouvement de translation selon l'axe de déplacement de l'objet, tandis que les moyens de préhension sont animés d'un mouvement de rotation autour du même axe. La séparation des moyens a pour avantage d'assurer le découplage des efforts exercés sur l'objet 10. Ce découplage permet d'exercer une traction efficace, sans avoir à exercer une pression trop forte, voire dommageable, sur l'objet à haler. Le mouvement de halage de l'objet est ainsi assuré par la coopération des deux moyens. Le fonctionnement du dispositif selon l'invention peut être décrit comme suit.

Pour assurer le déplacement de l'objet 10 dans la direction figurée par la flèche 118, on actionne l'arbre 115 de façon à ce que la rotation des poulies 14 entraîne le déplacement des bandes roulantes 12 dans le sens figuré par les flèches 119. Le déplacement des bandes roulantes entraîne un déplacement identique de l'objet 10.
Simultanément la rotation de l'arbre 115 met en rotation le châssis 114 dans le sens figuré par la flèche 120. Cette rotation entraîne le bobinage des courroies 110 du côté du flasque 15 et un débobinage simultané du côté de la poulie 16. Cette double action a pour effet de provoquer un déplacement relatif des moyens de préhension le long de l'objet 10, suivant une direction opposée au déplacement réel de l'objet 10 et des bandes roulantes 12. Ainsi l'objet 10 est en mesure de progresser linéairement tout en étant maintenu étroitement en contact avec les bandes roulantes.
Le mouvement de déplacement de l'objet est analogue au déplacement linéaire et continu du mors libre d'un étau le long de la vis sans fin qui permet le serrage, lorsqu'on serre ou desserre l'étau.
Inversement, le fonctionnement du dispositif étant par construction symétrique, le déplacement de l'objet 10 dans la direction opposée pourra être assuré en manoeuvrant l'arbre 115 dans le sens opposé.

Pour que l'action de halage soit effectivement réalisable il est nécessaire que le mouvement de rotation du châssis entraîne un déplacement relatif dont la valeur est sensiblement égale au déplacement imprimé à l'objet par la rotation des bandes roulantes 12. La coordination des deux mouvements peut être assurée comme dans le cas de la figure 1 par des moyens mécaniques tels que, par exemple, un dispositif réducteur monté sur l'arbre 115. Cependant on peut également utiliser tout moyen de régulation permettant de faire coïncider les deux mouvements.

Les moyens de préhension comportent une ou plusieurs courroies 110, enroulées autour des bandes roulantes et de l'objet à haler, dont le rôle est d'assurer par pression un contact étroit entre l'objet et les bandes roulantes. A cet effet, les courroies utilisées sont de préférence des courroies en fibres élastiques. De telles courroies présentent l'avantage de compenser un éventuel léger défaut de coordination qui pourrait exister entre les mouvements. De plus leur élasticité leur permet d'assurer la préhension d'objets dont la section n'est pas constante sur toute leur longueur.

Les moyens de mise en mouvement décrits dans ce qui précède sont présentés à titre d'exemple non limitatif. Il est bien entendu possible d'envisager des moyens autres, permettant d'assurer la mise en mouvement des moyens de traction et de préhension et leur bonne coordination.

Le dispositif selon l'invention tel qu'il est décrit dans le texte qui précède, présente l'avantage important de constituer un dispositif de halage fixe et donc d'encombrement réduit. Sa mise en oeuvre ne nécessite notamment pas l'existence d'une zone d'évolution comme peut par exemple le nécessiter un dispositif de halage par traction mettant en oeuvre un chariot tracteur faisant des mouvements alternatifs de va et vient.
Comme il a été dit, le dispositif présente également l'avantage d'exercer un mouvement de halage continu qui évite notamment à l'objet halé de subir des à-coups pouvant l'endommager. Le mouvement est par ailleurs réversible et être utilisé pour la mise à l'eau de l'objet 10.
Le dispositif selon l'invention peut en outre avantageusement s'adapter au halage d'objet dont la section n'est pas constante ou encore à des objets constitués de portions rigides et de portions plus souples.
Il peut enfin fonctionner de manière automatique et présente ainsi l'avantage de limiter le besoin de recourir à une intervention humaine dans des conditions parfois assez périlleuses.

## Revendications

1. Dispositif de halage automatique d'objets (10) de forme tubulaire de grande longueur, comportant des moyens de préhension (110, 112, 113,) pour saisir l'objet et des moyens de traction (12-14) pour effectuer le halage, **caractérisé en ce que:**
- les moyens de traction (12, 13, 14) étant des moyens mobiles en translation et aptes à entraîner dans leur mouvement, par friction, l'objet à haler (10) et
- les moyens de préhension (, 112, 113 et 110) étant des moyens aptes à maintenir en contact de manière continue les moyens de traction et l'objet à haler (10), le maintien étant réalisé au moins sur une section de l'objet et ces moyens de préhension étant animés d'un mouvement relatif par rapport à l'objet halé, dans un sens opposé au sens de halage (118);
le dispositif comportant en outre des moyens (115, 116, 117) pour actionner de manière coordonnée les moyens de traction et les moyens de préhension; l'ensemble des moyens exerçant des fonctions distinctes qui coopèrent pour assurer une traction continue de l'objet à haler (10), et une bonne répartition des contraintes sur sa surface, l'ensemble du dispositif ayant une position fixe.

2. Dispositif selon la revendication 1, **caractérisé en ce que** les moyens de traction comportent deux bandes roulantes (12), réalisées dans un matériau à fort pouvoir d'adhérence, ces bandes venant en contact de l'objet à haler (10).

3. Dispositif selon la revendication 2, **caractérisé en ce que** les moyens de préhension comportent un châssis (114) mobile en rotation autour de l'axe de traction de l'objet, ce châssis comportant au moins une courroie (110) tendue entre deux poulies (112, 113) et dont l'un des brins est enroulé en hélice autour des bandes roulantes (12) et de l'objet à haler (10), de façon à maintenir en contact les bandes roulantes et l'objet à haler.

4. Dispositif selon la revendication 3, **caractérisé en ce que** la courroie (110) est composée de fibres élastiques.

5. Dispositif selon la revendication 3, **caractérisé en ce que** le mouvement relatif des moyens de préhension est réalisé par la mise en rotation du châssis qui provoque le bobinage de la courroie (110) autour de l'objet à haler (10) et des bandes roulantes (12) par une des ses extrémités, et le débobinage simultané de la courroie par l'autre extrémité.

6. Dispositif selon la revendication 1, **caractérisé en ce que** les moyens pour actionner les moyens de traction et les moyens de préhension sont mus par un moteur hydraulique.

7. Dispositif selon la revendication 1, **caractérisé en ce que** les moyens pour actionner les moyens de traction et les moyens de préhension sont mus par un moteur électrique.

## Claims

1. Device for the automatic hauling of very long tubular objects (10), comprising gripping means (110, 112, 113,) for grasping the object and traction means (12-14) for performing the hauling, **characterized in that:**
- the traction means (12, 13, 14) are means able to move transtationally and in their movement are able to drive, using friction, the object (10) that is to be hauled, and
- the gripping means (112, 113 and 110) are means capable of keeping the traction means and the object (10) that is to be hauled continuously in contact, this continuous contact being achieved over at least a section of the object, and these gripping means being given a relative movement with respect to the hauled object, in a direction opposite to the direction of hauling (118),
the device also comprising means (115, 116, 117) for actuating the traction means and the gripping means in a coordinated manner; all these means performing separate functions which collaborate in order to ensure continuous traction on the object (10) that is to be hauled, and good distribution of stress over its surface, the entire device having a stationary position.

2. Device according to Claim 1, **characterized in that** the traction means comprise two rolling strips (12) made of a material with good adhesion, these strips coming into contact with the object (10) that is to be hauled.

3. Device according to Claim 2, **characterized in that** the gripping means comprise a chassis (114) able to move rotationally about the axis of traction of the object, this chassis comprising at least one belt (110) stretched between two pulleys (112, 113) and one of the strands of which is helically wound around the rolling strips (12) and around the object (10) that is to be hauled so as to keep the rolling strips and the object that is to be hauled in contact.

4. Device according to Claim 3, **characterized in that** the belt (110) is made up of elastic fibers.

5. Device according to Claim 3, **characterized in that** the relative movement of the gripping means is achieved by rotating the chassis, which causes the belt (110) to wind around the object (10) that is to be hauled and around the rolling strips (12) via one of its ends, and to unwind simultaneously from the other end.

6. Device according to Claim 1, **characterized in that** the means for actuating the traction means and the gripping means are driven by a hydraulic motor.

7. Device according to Claim 1, **characterized in that** the means for actuating the traction means and the gripping means are driven by an electric motor.

## Patentansprüche

1. Vorrichtung zum automatischen Einholen von Objekten (10) in Form einer Röhre mit großer Länge, die Greifmittel (110, 112, 113) zum Ergreifen des Objekts und Zugmittel (12-14) zum Ausführen des Einholens enthält, **dadurch gekennzeichnet, dass:**
- die Zugmittel (12, 13, 14) translatorisch bewegliche Mittel sind und das einzuholende Objekt (10) während ihrer Bewegung durch Reibung mitnehmen können und
- die Greifmittel (112, 113 und 110) Mittel sind, die die Zugmittel und das einzuholende Objekt (10) ununterbrochen in Kontakt halten können, wobei das Halten wenigstens an einem Abschnitt des Objekts erfolgt und wobei diese Greifmittel zu einer Relativbewegung in Bezug auf das eingeholte Objekt in einer Richtung, die zu der Einholrichtung (118) entgegengesetzt ist, angetrieben werden;
wobei die Vorrichtung außerdem Mittel (115, 116, 117) enthält, um auf koordinierte Weise die Zugmittel und die Greifmittel zu betätigen; wobei die Gesamtheit der Mittel verschiedene Funktionen ausübt, die zusammenwirken, um einen ununterbrochenen Zug des einzuholenden Objekts (10) und eine gute Verteilung der Kräfte auf seiner Oberfläche sicherzustellen, wobei die Vorrichtung als Ganzes eines feste Position hat.

2. Vorrichtung nach Anspruch 1, **dadurch gekennzeichnet, dass** die Zugmittel zwei Laufbänder (12) enthalten, die aus einem Material mit hoher Haftkraft verwirklicht sind, wobei diese Bänder mit dem einzuholenden Objekt (10) in Kontakt gelangen.

3. Vorrichtung nach Anspruch 2, **dadurch gekennzeichnet, dass** die Greifmittel einen Rahmen (114) enthalten, der um die Zugachse des Objekts rotatorisch beweglich ist, wobei dieser Rahmen wenigstens einen Riemen (110) enthält, der zwischen zwei Riemenscheiben (112, 113) gespannt ist und wovon ein Zweig schneckenförmig um die Laufbänder (12) und das einzuholende Objekt (10) gewickelt ist, derart, dass die Laufbänder und das einzuholende Objekt in Kontakt gehalten werden.

4. Vorrichtung nach Anspruch 3, **dadurch gekennzeichnet, dass** der Riemen (10) aus elastischen Fasern gebildet ist.

5. Vorrichtung nach Anspruch 3, **dadurch gekennzeichnet, dass** die Relativbewegung der Greifmittel durch Versetzen des Rahmens in Drehung verwirklicht wird, was das Wickeln des Riemens (110) um das einzuholende Objekt (10) und die Laufbänder (12) mit einem seiner Enden und das gleichzeitige Abwickeln des Riemens an seinem anderen Ende hervorruft.

6. Vorrichtung nach Anspruch 1, **dadurch gekennzeichnet, dass** die Mittel zum Betätigen der Zugmittel und der Greifmittel durch einen Hydraulikmotor bewegt werden.

7. Vorrichtung nach Anspruch 1, **dadurch gekennzeichnet, dass** die Mittel zum Betätigen der Zugmittel und der Greifmittel durch einen Elektromotor bewegt werden.
